# EUROPÄISCHE PATENTSCHRIFT

(11) **EP 2 627 968 B1**
(45) Veröffentlichungstag und Bekanntmachung des Hinweises auf die Patenterteilung: **05.12.2018**
(21) Anmeldenummer: 11773400.4
(22) Anmeldetag: 14.10.2011
(51) Int. Cl.: G01B 11/25

(54) **VORRICHTUNG UND VERFAHREN ZUR DREIDIMENSIONALEN BILDERFASSUNG**
DEVICE AND METHOD FOR THREE-DIMENSIONAL IMAGE CAPTURING
DISPOSITIF ET PROCÉDÉ POUR L'ACQUISITION D'IMAGES EN TROIS DIMENSIONS

(30) Priorität: 14.10.2010 EP 10013625
(43) Veröffentlichungstag der Anmeldung: 21.08.2013
(73) Patentinhaber: Recognitionfocus GmbH, 01067 Dresden (DE)
(72) Erfinder: IHLEFELD, Joachim, 01067 Dresden (DE)
(74) Vertreter: Blumbach · Zinngrebe Patent- und Rechtsanwälte
(86) Internationale Anmeldenummer: PCT/EP2011/005168
(87) Internationale Veröffentlichungsnummer: WO 2012/048889

(56) Entgegenhaltungen:
- US-A1- 2007 057 946
- US-A1- 2007 124 949
- US-B1- 7 256 899

## Beschreibung

Die Erfindung betrifft allgemein die optische Erfassung der Form dreidimensionaler Objekte. Im Speziellen betrifft die Erfindung eine bildgestützte Erfassung der dreidimensionalen Form von Objekten.

Zur Erfassung der Struktur dreidimensionaler Objekte werden vielfach sogenannte 3D-Laserscanner eingesetzt. Bei einem solchen Scanner wird die Oberfläche des zu erfassenden Objekts mit einem Laserstrahl abgetastet. Hierbei sind Systeme bekannt, die nach dem Flugzeitprinzip arbeiten. Ein weiteres häufig angewendetes Prinzip basiert auf einer Distanzerfassung durch Triangulation. Die Flugzeit-Messung gestattet eine einfache Vermessung auch sehr weit entfernter Objekte, wohingegen die Messgenauigkeit typischerweise gegenüber einem Triangulations-System begrenzt ist. Ein Nachteil beider Systeme liegt darin, dass das Objekt mit dem Laserstrahl sequentiell abgetastet wird, was zu einer langen Messzeit führt. Generell sind Laserscanner zur Erfassung bewegter Objekte nicht oder nur unter starken Einschränkungen geeignet.

Noch eine weitere Methode zur Erfassung der Topographie von Oberflächen in drei Dimensionen ist die Streifenprojektion. Auch dieses Verfahren basiert auf einer Distanzbestimmung durch Triangulation. Dabei wird mit einer strukturierten Beleuchtung ein Streifenmuster auf das zu erfassende Objekt projiziert und das Objekt unter einem Winkel zur Lichteinfallsrichtung mit einer Kamera aufgenommen. Die relative Verschiebung der Streifen in der Bildebene beinhaltet die Distanzinformation in Aufnahmerichtung.

Obschon das Verfahren eine Erfassung der Distanzinformation mit nur einem einzelnen Bild gestattet, hat das Verfahren einen wesentlichen Nachteil. Die Höheninformation ist im Allgemeinen nicht eindeutig anhand eines einzelnen Bildes erfassbar, denn ein Bereich, welcher entlang der Aufnahmerichtung so weit gegenüber einer Referenzfläche verschoben ist, dass im aufgenommenen Bild das Streifenmuster auf dem Bereich wieder mit dem Streifenmuster auf der Referenzfläche koinzidiert, kann nicht eindeutig einer bestimmten Distanz- oder Höhenkoordinate zugeordnet werden. Um dem zu begegnen, könnte ein breiteres Streifenmuster verwendet werden.

Dies reduziert allerdings wiederum die Ortsauflösung, beziehungsweise die Punktdichte der aus dem Bild errechneten Punktwolke. In der Praxis wird das Problem der Nicht-Eindeutigkeit daher auf andere Weise gelöst. Es wird eine Bildsequenz aufgenommen, bei welcher in den Bildern das Streifenmuster verändert wird. Eine besonders elegante Methode ist hier eine sogenannte Gray-Codierung. Hierbei wird eine Bildsequenz mit jeweils verdoppelter Streifendichte aufgenommen.
Die Abfolge der Streifen entspricht dann einem Bitmuster entsprechend einer Ordnungszahl, die dann jedem Ort der Oberfläche eindeutig zugeordnet werden kann.

Dabei ist es wichtig, dass der Streifenordnung im Projektor die übereinstimmende Streifenordnung in der Kamera zugeordnet wird. Erst dann ist gesichert, dass nach Auswertung der dem Fachmann einschlägig bekannten Triangulationsformel der berechnete z-Wert des anvisierten Objektpunkts einen Wert aufweist, der mit der tatsächlichen Distanz des Objektpunktes übereinstimmt.

Diese Zuordnung kann dabei über Abzählen der einzelnen Streifen erfolgen. Auf glatten ununterbrochen Flächen ist diese ohne größere Schwierigkeiten möglich. Je nach Position der Kamera, des Projektors oder beiden, aber auch aufgrund einer ungünstigen Form des Objektes (beispielsweise Bohrungen oder Hinterschneidungen) selbst, kommt es zu Abschattungen die eine eindeutige Abzählung der Streifen verhindern. Beispielsweise kann es vorkommen, dass bei einer Bohrung nicht definitiv festgestellt werden kann, wie viele Streifen abgeschattet wurden. Auch kommt es aufgrund der üblicherweise eingesetzten Beleuchtung, die in der Regel gleichförmig ist zu einer periodischen Uneindeutigkeit dass einzelne Streifen nicht voneinander getrennt werden können.

Ebenso sind Verfahren bekannt, die anstelle von amplitudenmodulierten einfarbigen Mustern auch mehrfarbige Muster projizieren. Auch hier kann die Uneindeutigkeit verringert werden. All diesen Verfahren ist gemein, dass sie mechanische Stellelemente zur lateralen Verschiebung eines nichtdynamischen Streifenmusters benötigen, beispielsweise für das Phasenschiebeverfahren, oder aber aktive Bildmatrizen wie beispielsweise LCOS, LCD's DMD's etc. einsetzen um die unterschiedlich modulierten Streifen zu erzeugen.

Neben den sehr nachteiligen Einschränkungen bezüglich stillstehender Objekte weisen sie zudem den Nachteil auf, dass die derart aufgebauten Projektoren sehr teuer, kompliziert und damit fehleranfällig sind. Speziell wenn mehrere Projektoren eingesetzt werden sollen, beispielsweise um das Objekt rundherum zu vermessen sind die Gesamtkosten derartig aufgebauter System sehr hoch.

In der Patentschrift US 7278585 hingegen wird ein redundanter zweidimensionaler Code und ein Decodierverfahren beschrieben, welcher zu Ermittlung einer zweidimensionalen Position eines für die Codeauswertung angepassten Lesegeräts auf einer Oberfläche dient. Dabei kann die Position des Stiftes ermittelt werden ohne dass dazu das gesamte Muster aufgenommen werden muss. Besonders vorteilhaft ist hierbei, dass eine zeitlich konstante Projektion des Musters zur Positionsermittlung ausreicht.

Insgesamt besteht aber auch bei Streifenprojektionsverfahren, die eine eindeutige Distanzinformation liefern, das gleiche Problem wie bei Laserscannern, nämlich die Notwendigkeit einer Meßsequenz, die immer eine gewisse Zeit in Anspruch nimmt. Die vorstehend beschriebenen Verfahren sind daher allesamt problematisch, wenn die Objekte nicht während des gesamten Meßzyklus absolut stillstehen.

Ein zur Streifenprojektion vom Prinzip her ähnliches Verfahren ist aus der US 7,256,899 B1 bekannt. Zur Erstellung eines 3D-Modells wird eine Bildsequenz mit mehreren Bildern aufgenommen, während ein Lichtmuster bekannter Struktur über das Objekt läuft. Ähnlich hierzu ist wiederum auch ein in der US 2007/0057946 A1 beschriebenes Verfahren, bei welchem nacheinander ein Zufalls- oder Pseudo-Zufalls-Muster aus schwarzen und weißen Elementen und ein periodisches Muster auf das Objekt projiziert und aufgenommen wird.

Noch ein weiteres Verfahren zur Ermittlung der Höheninformation ist die stereoskopische Aufnahme von Objekten. Bei diesem Verfahren wird das Objekt mit zwei Kameras aufgenommen, welche das Objekt unter unterschiedlichen Blickwinkeln betrachten. Aus den zwei Bildern wird dann die Distanz- oder Höheninformation errechnet. Hierbei besteht dann aber das Problem, dass korrelierende Bildelemente der beiden Bilder präzise einander zugeordnet werden müssen. Dies ist jedoch nur bei Existenz von Strukturen auf den Objektoberflächen möglich. Zudem ist die gegenseitige Ausrichtung der Kameras und des Objekts wichtig, um die Distanzinformation präzise errechnen zu können. Fehlerhafte Zuordnungen von Bildelementen in den beiden Bildern können zu entsprechend fehlerhafter Distanzinformation führen. Um dieses Problem zu lösen, ist es aus der US 2007/0124949 A1 bekannt, das Objekt mit einem Muster zu beleuchten. Die Musterelemente erlauben dann eine einfachere Zuordnung der Bildelemente. Dennoch ist es auch hier zur Errechnung der Höheninformation notwendig, zwei Kamerabilder aufzunehmen und beide Bilder zu verarbeiten.

Es ist daher die Aufgabe der Erfindung, ein Verfahren und eine Vorrichtung zur dreidimensionalen Erfassung von Objekten bereitzustellen, welche die vorstehend genannten Nachteile vermeiden und damit eine sehr schnelle Erstellung eines 3D-Modells eines Objekts ermöglichen. Diese Aufgabe der Erfindung wird durch den Gegenstand der unabhängigen Ansprüche 1 und 8 gelöst. Vorteilhafte Ausgestaltungen und Weiterbildungen der Erfindung sind in den jeweiligen abhängigen Ansprüchen angegeben.
Demgemäß sieht die Erfindung eine Vorrichtung zur Erfassung von dreidimensionalen Formen eines Objekts vor, welche
- eine Kamera,
- wenigstens eine Beleuchtungseinrichtung zur Beleuchtung des Objekts mit einem Beleuchtungsmuster, welches einen in zwei unterschiedlichen Raumrichtungen modulierten zweidimensionalen Code mit Codeelementen enthält, und
- eine Recheneinrichtung zur Errechnung von dreidimensionalen Ortskoordinaten einer Oberfläche des Objektsumfasst. Dabei sind die Kamera und die Beleuchtungseinrichtung so angeordnet, dass zwischen der Beleuchtungsrichtung und der Betrachtungsrichtung der Kamera ein Winkel eingeschlossen wird, um eine Höhenermittlung im Triangulationsverfahren zu ermöglichen. Die Beleuchtungseinrichtung stellt dabei eine strukturierte Beleuchtung eines zu erfassenden, vor der Kamera angeordneten Objekts in Form eines Beleuchtungsmusters bereit, wobei das Beleuchtungsmuster einen in zwei unterschiedlichen Raumrichtungen modulierten zweidimensionalen Code mit Codeelementen enthält.
Die Recheneinrichtung ist mit der Kamera verbunden, so dass Bilddaten eines Digitalbildes von der Kamera an die Recheneinrichtung übertragbar sind. Die Recheneinrichtung ist dazu eingerichtet, die Koordinaten der Codeelemente und die in den Codeelementen codierte Information aus dem von der Kamera erhaltenen Digitalbild zu extrahieren, sowie anhand eines einzelnen Digitalbilds der Kamera und der aufgenommenen Codeelemente und deren Position im Digitalbild eine Distanzinformation der mit den Codeelementen beleuchteten Orte des Objektszu errechnen und die 2D und 3D Informationen des Objektes zu ermitteln. Als 2D- und 3D-Informationen wird dabei ein dreidimensionales Modell des Objekts mit dreidimensionalen Ortskoordinaten verstanden. Bezogen auf das Bezugssystem der Kamera kann die Distanzinformation auch als Höheninformation bezeichnet werden.

Dabei kann die Recheneinrichtung insbesondere auch anhand der decodierten Information eine Indizierung der Codeelemente vorzunehmen, und anhand der Indizierung der Codeelemente und deren Position im Bild die Distanzinformation des mit dem Codeelement beleuchteten Ortes mit nur einer Aufnahme, beziehungsweise nur einem Digitalbild der Kamera die 2D- und 3D- Informationen des Objektes errechnen. Unter einer Indizierung der Codeelemente wird eine Zuordnung von Indizes zu den einzelnen Codeelementen verstanden, welche die Reihenfolge, beziehungsweise Anordnung der Codeelemente in einem zweidimensionalen Raster beschreiben. Im einfachsten Fall kann beispielsweise eine Indizierung mit Indizes i, j vorgenommen werden, welche die Zuordnung der Codeelemente in einer matrixförmigen Anordnung beschreiben, wobei die Indizes i, j die Zeilen-, beziehungsweise Spaltennummer bezeichnen.

Da jeweils für die Erstellung eines solchen 3D-Modells, beziehungsweise der Ermittlung der Distanzinformation des Objektes nur eine Aufnahme einer einzelnen Kamera verwendet wird, ist die Vorrichtung besonders geeignet zur EchtzeitVerarbeitung. So kann die Kamera zur Aufnahme von Bildsequenzen ausgebildet sein, wobei die Recheneinrichtung eingerichtet ist, für jedes Digitalbild der Bildsequenz, oder zumindest für eine Teilmenge der Digitalbilder der Bildsequenz jeweils ein dreidimensionales Modell, beziehungsweise zum Digitalbild die zugehörige Distanzinformation zu ermitteln. Dies ermöglicht es dabei auch insbesondere, dreidimensionale Modelle des Objektes zu erstellen, während das Objekt bewegt wird. Dazu kann gemäß einer Weiterbildung der Erfindung die Kamera insbesondere auch als Videokamera ausgebildet sein.

Gemäß der Erfindung lässt sich die Distanzinformation aufgrund eines einzelnen Kamerabildes im Allgemeinen bereits errechnen. Ein Problem ergibt sich allerdings, wenn Codeelemente in Blickrichtung der Kamera abgeschattet oder mehrere Codeelemente durch einen nicht remittierenden Teil der Oberfläche bedingt, z.B durch eine Bohrung oder eine tief schwarze Fläche, fehlen. In diesem Fall kann die Distanzinformation mehrdeutig werden. Mit anderen Worten können Artefakte durch im aufgenommenen Bild fehlende Rasterelemente entstehen. Diese Mehrdeutigkeiten können eliminiert werden, wenn, wie erfindungsgemäß vorgesehen, ein in zwei unterschiedlichen Raumrichtungen modulierter zweidimensionaler Code mit Codeelementen verwendet wird. Demnach werden sich je nach Code, beziehungsweise der codierten Information entlang dieser Richtungen benachbarte Codeelemente sich voneinander unterscheiden. Diese Codierung ermöglicht es, Mehrdeutigkeiten in praktisch allen Fällen bereits in einem einzelnen Bild dadurch zu eliminieren, dass mittels der zusätzlichen Codeinformation Verbindungen zwischen Codeelementen, zwischen denen eines oder mehrere Codeelemente im Bild fehlen, durch die Recheneinrichtung hergestellt werden.

Solche Mehrdeutigkeiten können erfindungsgemäß eliminiert werden, wenn die Nachbarschaftsbeziehungen der Codeelemente berücksichtigt werden. Dazu kann gemäß einer Weiterbildung der Erfindung die Recheneinrichtung dazu eingerichtet sein,
- im Digitalbild die Koordinaten der Codeelemente des zweidimensionalen Codes zu detektieren und
- neben den Koordinaten zumindest ein weiteres Merkmal der Codeelemente zu bestimmen und mit dem weiteren Merkmal einen Codezustand zu bestimmen, beziehungsweise zu quantisieren,
- Nachbarschaften der Codeelemente zu bestimmen,
- aus den bestimmten Nachbarschaften ein Gitter mit zugeordneten quantisierten Codezuständen zu erzeugen und diese quantisierten Codezustände in einer Matrix abzulegen,
- die Matrix zu decodieren, indem
- eine Zuordnungstabelle der detektierten Codelemente zu Indizes der Strahlen der Beleuchtungsquelle oder zu Sollpositionen gebildet wird, und
- anhand der Zuordnungstabelle und abgespeicherten Modelldaten der Strahlungsquelle und des Bildsensors ein dreidimensionales Modell des von der Kamera aufgenommenen Objekts zu berechnen.

Die quantisierten Codezustände repräsentieren die verschiedenen Zustände der Codeelemente. Beispielsweise wären bei einem abwechselnd aus einfachen Kreisen und Dreiecken gebildeten Gitter zwei quantisierte Codezustände vorhanden, welche die beiden vorkommenden Formen der Codeelemente repräsentieren.

Zur Bestimmung der Nachbarschaften von Codeelementen kann von der Recheneinrichtung eine Bestimmung anhand von Nachbarschaftswahrscheinlichkeiten erfolgen, wobei die Berechnung einer Nachbarschaftswahrscheinlichkeit für zwei Codeelemente zumindest anhand des gegenseitigen Abstands im Digitalbild erfolgt.

Die Beleuchtungsrichtung umfasst in vorteilhafter Ausgestaltung der Erfindung einen Laser und ein vor dem Laser angeordnetes diffraktives optisches Element (DOE), wobei das diffraktive optische Element das Beleuchtungsmuster mit dem in zwei unterschiedlichen Raumrichtungen modulierten zweidimensionalen Code erzeugt. Die Erzeugung des zweidimensionalen Codes mit einem DOE bietet den Vorteil, ein scharfes Muster in nahezu unbeschränkter Grösse zu erzeugen. jeder Tiefenebene zu erzeugen. Ein Anpassen der Beleuchtungsoptik auf unterschiedliche Tiefenebenen kann somit vorteilhaft vermieden werden.

Besonders vorteilhaft ist des Weiteren die Abbildung inselförmiger beziehungsweise isolierter Strukturen auf die zu erfassenden Flächen. Inselförmig, beziehungsweise isoliert bedeutet in diesem Zusammenhang, dass ein Codeleement bezüglich der Helligkeitsverteilung in Blickrichtung der Beleuchtungsquelle lateral beabstandet zu benachbarten Codeelementen angeordnet ist. Die Leuchtdichte kann somit im Vergleich zu einer flächigen Beleuchtung deutlich vergrößert werden. Beispielsweise ist somit auch auf dunklen Teilflächen des Objektes auch so noch ein ausreichender Kontrast gewährleistet. Insbesondere besitzen derartige Codeelemente auch einen Schwerpunkt der Helligkeitsverteilung, der mit hoher Genauigkeit, insbesondere auch mit Subpixel-Genauigkeit ermittelt werden kann. Besonders vorteilhaft ist es, wenn das diffraktive optische Element als Phasenelement ausgebildet ist. Vorzugsweise ein Mehrphasen-DOE beispielsweise ein 4- oder 8-Phasen-DOE. Die Anzahl der Phasen steht dabei für die Anzahl der kodierbaren diskreten Phasenstufen.

Mit Phasen-DOE's können sehr hohe Beugungseffizienzen erreicht werden. Die DOE's werden dabei typischerweise auf Quarz als Substratmaterial aufgebracht. Es sind aber auch andere Substrate denkbar. Ein weiterer Vorteil ist die vereinfachte Herstellung, da die Phasen-DOE's mittels Pressmatrizen in größeren Stückzahlen hergestellt werden können. So können gegebebenfalls auch mehrere DOE's verwendet werden, um das Objekt aus unterschiedlichen Richtungen zu beleuchten. Auch die zur Beleuchtung verwendeten oder verwendbaren Laserdioden stehen kostengünstig zur Verfügung. Die umschließende Beleuchtung eines Objektes aus mehreren Richtungen ist somit kosteneffizient zu bewerkstelligen.

In einer besonders bevorzugten Ausführungsform der erfindungsgemäßen Vorrichtung weist die Beleuchtungseinrichtung mehrere Sub-Beleuchtungseinrichtungen oder Lichtquellen auf. So können Abschattungen oder Hinterschneidungen der Objekte untereinander die eine Bestimmung der Ortskoordinaten erschweren vorteilhaft reduziert werden.

Es ist, wie bereits gesagt besonders vorteilhaft, wenn die Beleuchtungseinrichtung ein Beleuchtungsmuster in Form einer Anordnung isolierter, beziehungsweise inselförmiger Codeelemente erzeugt. Im Gegensatz zu streifenförmigen Beleuchtungen können so höhere Leuchtdichten bei gleicher Ausgangsleistung der Lichtquelle erzielt werden. Somit kann auch bei dunkeln Teilflächen des zu untersuchenden Objekts noch ein ausreichender Kontrast erzielt werden.

Es sind aber auch andere inselförmige Codeelemente denkbar, beispielsweise in Form von Ellipsen. Hier könnte die Codierung in der Winkelorientierung (beispielsweise von 0° bis 90°) der Haupt- oder Nebenachsen der Ellipsen verschlüsselt sein. Derartige Codeelemente, die allgemeiner aus länglichen, inselförmigen Strukturen bestehen, bei welchen die Bitinformation in unterschiedlichen Verkippungen der Längsachsen der Codeelemente codiert sind, eignen sich besonders gut für eine robuste und schnelle, damit auch echtzeitfähige Decodierung der Bitinformation, welche eine Orts- oder Indexinformation beinhaltet. Weiterhin sind längliche inselförmige Codeelemente, wie insbesondere Ellipsen auch sehr formstabil. Dies bedeutet unter anderem, dass die Orientierung der Ellipsen auch noch bei Verzeichnungen des Objektives der Kamera, wie sie etwa am Bildrand auftreten können, vergleichsweise sicher erfassbar ist.

Es könnten aber auch der Durchmesser der Hauptachsen variiert werden. So würde dieser Wert langsam verringert bis die Ellipse zu einem Kreis geworden ist um nach weiterer Verringerung zur Nebenachse zu werden.
Die vormalige Nebenachse ist nun die Hauptachse. Im Allgemeinen ist mit Codeelementen jede Form von Modulation gemeint, die mittels eines Bildsensors ausgewertet werden kann und eine ausreichende Unterscheidung ermöglicht.

In einer ganz besonders bevorzugten Ausführungsform ist die Fläche die das Beleuchtungsmuster in der Objektebene beleuchtet, größer als das beleuchtete Objekt selbst.

Damit ist es möglich durch die das Objekt umgebenden Referenzfläche in ihrer Position bekannte Ortskoordinaten zur Berechnung der Höhenkoordinaten des zu untersuchenden Objektes heranzuziehen.

Es ist des Weiteren vorteilhaft, wenn die Beleuchtungseinrichtung einen gepulsten Laser umfasst. Hiermit können sehr hohe Spitzenleistungen erzeugt werden. Ein Beispiel für einen solchen gepulsten Laser ist eine Pulse Laser Diode. Beispielsweise kann eine Infrarot-Laserdiode mit einer Leistung von 10W und einer Pulsbreite von typischerweise 50ns verwendet werden. Es sind auch noch leistungsstärkere Laserdioden erhältlich. Es sind aber auch CW Laser Dioden denkbar (engl.: CW; continous wave). Geeignet ist beispielsweise eine Laserdiode mit einer Leistung im Bereich von 3W.

In einer weiteren ganz bevorzugten Ausführungsform erfolgt die Berechnung der 2D- und/oder 3D-Koordinaten auf einem FPGA und/oder einem DSP und/oder einem vergleichbaren Bauelement programmierbarer Logik. Somit ist eine Berechnung in Videoechtzeit gewährleistet.
Die Berechnung kann aber auch auf einen externen angeschlossen Vorrichtung erfolgen, sofern deren Rechenleistung dies gestattet.

Nach dem erfindungsgemäßen Verfahren zur Erfassung von dreidimensionalen Formen von Objekten wird ein Objekt vor einer Kamera angeordnet, das Objekt mittels wenigstens einer Beleuchtungseinrichtung mit einem Beleuchtungsmuster beleuchtet, welches einen in zwei unterschiedlichen Raumrichtungen modulierten zweidimensionalen Code mit Codeelementen enthält, und das beleuchtete Objekt mit der Kamera aufgenommen.

Zwischen der Richtung von der Beleuchtungseinrichtung zum Objekt und der Betrachtungsrichtung der Kamera in Richtung auf das Objekt wird dabei ein Winkel eingeschlossen, um im Digitalbild eine distanzabhängige laterale Verschiebung des jeweiligen Codeelements zu erzielen. Die Recheneinrichtung extrahiert die Koordinaten der Codeelemente und die in den Codeelementen codierte Information aus dem von der Kamera erhaltenen Digitalbild. Anhand der Codeelemente und deren Position im Bild wird dann von der Recheneinrichtung eine Distanzinformation des mit dem Codeelement beleuchteten Ortes aus dem aufgenommenen einzelnen Digitalbild errechnet.

Um die Codeelemente in einem Raster einzuordnen, ist es dabei günstig, anhand der decodierten Information der Codeelemente eine Indizierung der Codeelemente vorzunehmen, so dass dann anhand der Indizierung der Codeelemente und deren Position im Bild eine Distanzinformation des mit dem Codeelement beleuchteten Ortes errechnet wird.

In einer besonders bevorzugten Weiterbildung werden durch die Recheneinrichtung
- im Digitalbild die Koordinaten der Codeelemente des zweidimensionalen Codes detektiert und
- neben den Koordinaten zumindest ein weiteres Merkmal der Codeelemente bestimmt und mit dem weiteren Merkmal einen Codezustand quantisiert, sowie
- anhand der Codezustände Nachbarschaften der Codeelemente bestimmt, und
- aus den bestimmten Nachbarschaften ein Gitter mit zugeordneten quantisierten Codezuständen erzeugt und diese quantisierten Codezustände in einer Matrix einträgt,
- die Matrix decodiert, indem
- eine Zuordnungstabelle der detektierten Codelemente zu Indizes der Strahlen der Beleuchtungsquelle oder zu Sollpositionen gebildet wird, und
- anhand der Zuordnungstabelle und abgespeicherten Modelldaten der Strahlungsquelle und des Bildsensors ein dreidimensionales Modell des von der Kamera aufgenommenen Objekts berechnet wird.

Gemäß noch einer Weiterbildung der Erfindung werden zur Erstellung des dreidimensionalen Modells von der Recheneinrichtung im Digitalbild die Koordinaten der Codeelemente des zweidimensionalen Codes detektiert,
- neben den Koordinaten zumindest ein weiteres Merkmal der Codeelemente bestimmt und mit dem weiteren Merkmal ein Codezustand ermittelt, sowie
- eine Nachbarschaft der Codeelemente bestimmt, wobei
- aus der Nachbarschaften der Codeelemente eine Matrix mit zugeordneten Codezuständen erzeugt wird. Die Matrix wird dann decodiert, indem die einzelnen Codezustände der Matrix mit einer Codetabelle verglichen und jeweils ein zweidimensionaler Strahlindex der Strahlen der Beleuchtungseinrichtung ermittelt wird. Anhand des zweidimensionaler Strahlindex und anhand abgespeicherter Modelldaten der Beleuchtungseinrichtung und des Bildsensors der Kamera wird dann das dreidimensionale Modell des Objekts berechnet wird.

Die abgespeicherten Modelldaten umfassen beispielsweise den Winkel zwischen den Strahlen der Beleuchtungseinrichtung und der Kamera-Blickrichtung. Die Kenntnis des Winkels gestattet die Erstellung eines Modells mit korrekt skalierten Distanzwerten. Als Nachbarschaft wird eine Umgebung bestimmter Größe, beispielsweise eine 3 x 3- oder 4 x 4-Umgebung von zum jeweiligen Codeelement benachbarten Codeelementen bezeichnet. Die in die Matrix, beispielsweise entsprechend den vorgenannten Beispielen dann eine 3 x 3- oder 4 x 4-Matrix eingetragenen Codewerte stellen bei korrekter Identifizierung des Codezustandes dann einen Ausschnitt des gesamten, in der Codetabelle vorhandenen Codes dar. Der zweidimensionale Strahlindex eines Codeelements wird dann ermittelt, indem dieser Ausschnitt mit der Codetabelle verglichen wird. Ist eine Übereinstimmung mit den Werten der Codetabelle gefunden, so ergibt sich dann anhand der Position dieser Übereinstimmung innerhalb der Codetabelle der gesuchte Strahlindex. Der Strahlindex kann dann zusammen mit dem aus dem Digitalbild ermittelten zugehörigen Ort des jeweiligen Codeelements in die weiter oben bereits erwähnte Zuordnungstabelle eingetragen und anhand dieser zugeordneten Werte dann das dreidimensionale Modell anhand abgespeicherter Modelldaten der Beleuchtungseinrichtung und des Bildsensors der Kamera von der Recheneinrichtung errechnet werden.
In einem weiteren besonders bevorzugten Verfahren, bei welchem Nachbarschaftswahrscheinlichkeiten von Codeelementen unter Berücksichtigung des gegenseitigen Abstandes der Codeelemente im Digitalbild berechnet werden, und wobei anhand der Nachbarschaftswahrscheinlichkeiten Codeelementen zu Chains zusammengefasst werden.

Um die Genauigkeit der Bestimmung der 3D-Information zu erhöhen, ist es weiterhin günstig, die Positionen der Codeelemente aus dem Digitalbild durch die Recheneinrichtung mit Subpixel-Genauigkeit zu bestimmen. Eine solche Bestimmung kann durch Ermittlung des Schwerpunkts der Helligkeitsverteilung eines Codeelements in einfacher Weise erfolgen.

Es ist weiterhin vorteilhaft, mit der Beleuchtungseinrichtung ein Beleuchtungsmuster mit inselförmigen Codeelementen zu erzeugen wird, wobei die Codeelemente eine Modulation bezüglich ihrer Form oder Größe aufweisen, und wobei in der Modulation Positionsinformation codiert ist.

Um die Segmentierung zu erleichtern, hat es sich weiterhin als sehr günstig herausgestellt, mit der Beleuchtungseinrichtung ein Beleuchtungsmuster zu erzeugen, bei welchem die Codeelemente in einem hexagonalen Raster angeordnet sind.

Es ist weiterhin auch möglich, das Objekt von der Beleuchtungseinrichtung mittels mehrerer Beleuchtungsvorrichtungen zu beleuchten. Damit kann beispielsweise zusätzlich zum Beleuchtungsmuster das Objekt mit Licht eines bestimmten Farbtons angestrahlt werden, etwa um die Textur zu erfassen. Gegebenenfalls ist aber der Kontrast zwischen dem Beleuchtungsmuster und der zusätzlichen Beleuchtung zu groß, um die zwischen den Codeelementen liegenden Bereiche des Objekts sicher erfassen zu können. Eine Möglichkeit, dies zu vermeiden, ist eine sequentielle Aufnahme. Um aber besonders für Echtzeit-Anwendungen möglichst schnell dreidimensionale Modelle errechnen zu können, kann eine Konturerkennung gemäß einer besonders vorteilhaften Weiterbildung der Erfindung auch anhand des mit dem Beleuchtungsmuster beleuchteten Objekts dadurch erfolgen, indem das Digitalbild mit einem Tiefpass gefiltert wird. Durch den Tiefpass werden die Konturen des Beleuchtungsmusters geglättet, so dass die Konturen des Objekts erfassbar werden. Gemäß dieser Weiterbildung der Erfindung ist demgemäß die Recheneinrichtung dazu eingerichtet, das aufgenommene Digitalbild mit einem Tiefpass zu filtern und anhand des gefilterten Bildes Konturen des Objekts zu extrahieren. Unter einem Extrahieren der Konturen wird dabei insbesondere eine Segmentierung der Konturen verstanden.

Die Erfindung wird nachfolgend anhand von Ausführungsbeispielen und unter Bezugnahme auf die beigeschlossenen Zeichnungen näher erläutert. Dabei verweisen gleiche Bezugszeichen auf gleiche oder entsprechende Elemente.

Es zeigen:
**Fig. 1a** zeigt eine Gesamtansicht eines Streifenprojektors nach Stand der Technik bei der Referenzbestimmung sowie das sich ergebende Streifenbild in der Kamera.
**Fig. 1b** zeigt eine Gesamtansicht eines Streifenprojektors nach Stand der Technik bei der Vermessung eines kubischen Objektes sowie das sich ergebende Streifenbild in der Kamera.
**Fig. 1c** zeigt eine Gesamtansicht eines Streifenprojektors nach Stand der Technik bei der Vermessung eines kubischen Objektes sowie das sich ergebende Streifenbild in der Kamera. Hierbei ist der Körper und Beobachtungsrichtung derart ausgedehnt das es im Vergleich zu dem Bild aus Fig. 1b zu einer Uneindeutigkeit kommt.
**Fig. 2a** zeigt eine Gesamtansicht erfindungsgemäßen Streifenprojektors bei der Vermessung der Situation aus Fig. 1a.
**Fig. 2b** zeigt eine Gesamtansicht erfindungsgemäßen Streifenprojektors bei der Vermessung der Situation aus Fig. 1b.
**Fig. 2c** zeigt eine Gesamtansicht erfindungsgemäßen Streifenprojektors bei der Vermessung der Situation aus Fig. 1c.
**Fig. 3** zeigt eine 3D-Ansicht einer Beleuchtungseinrichtung und das die Beleuchtungseinrichtung beleuchtende Objekt.
**Fig. 4** zeigt die sich aus Fig. 3 ergebende Punktewolke der Schnittpunkte der Strahlen der Beleuchtungseinrichtung mit dem Objekt bzw. Referenzebene in einer Draufsicht. Die Raumwinkelverteilung der Strahlen sind hierbei aquidistant gewählt. Es sind aber auch andere Punkteverteilungen denkbar.
**Fig. 5** zeigt die sich aus Fig. 3 ergebende Punktewolke der Schnittpunkte der Strahlen der Beleuchtungseinrichtung mit dem Objekt bzw. Referenzebene in einer Draufsicht.
   Die Raumwinkelverteilung der Strahlen ist hierbei kartesisch gewählt.
**Fig. 6** zeigt einen Bildausschnitt aus Fig. 5 mit eingezeichneten Gitterlinien.
**Fig. 7** zeigt ein Beispiel eines Beleuchtungsmusters.

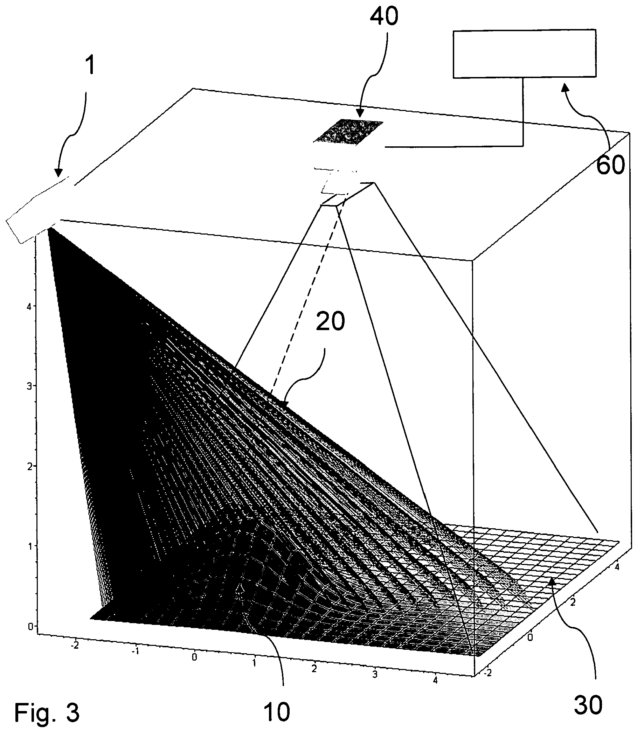

In den Figuren 3 bis 6 wird dabei wird anhand einer Gaussfläche demonstriert wie mittels einer einzigen Aufnahme die kompletten 2D und 3D-Daten des anvisierten Objektes ermittelt werden können.

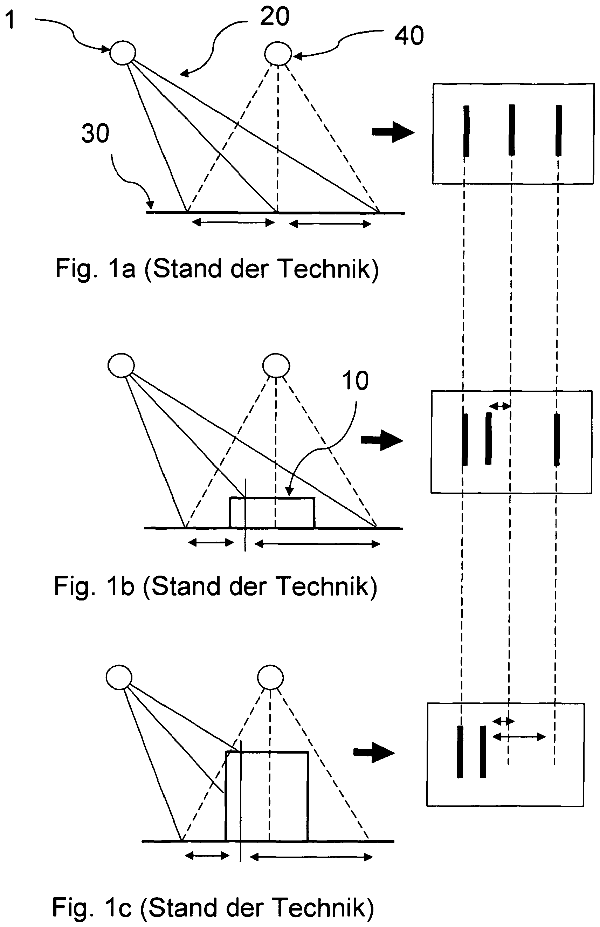

Fig. 1a zeigt eine Gesamtansicht eines Streifenprojektors nach Stand der Technik bei der Referenzbestimmung sowie das sich ergebende Streifenbild in der Kamera. Ein Streifenprojektor 1 projiziert dabei auf eine Fläche eine Bild. Dieses projizierte Bild wird von der Kamera 40 aufgenommen. Die Messung dient der Kalibrierung der Kamera 40. Sind die Positionskoordinaten der Kamera der Streifen bekannt, können Objekte 10 die in einem nächsten Schritt in das Bildfeld der Kamera 40 positioniert werden bestimmt werden. Dies ist in Fig. 1b geschehen. In Fig. 1b ist das Objekt 10 ein Quader.

Da zwischen Streifenprojektor 1 und Kamera 40 ein Winkel eingeschlossen ist kommt es bei dem zentralen Streifen zu einer Verschiebung im Bild der Kamera. Der Streifen wandert dabei nach links. Aus einem Vergleich der Streifenposition aus der Referenzmessung kann auf die Höhe des Körpers zurückgeschlossen werden. Diese Höhenbestimmung ist allerdings nur innerhalb eines gewissen Eindeutigkeitsbereichs eindeutig.

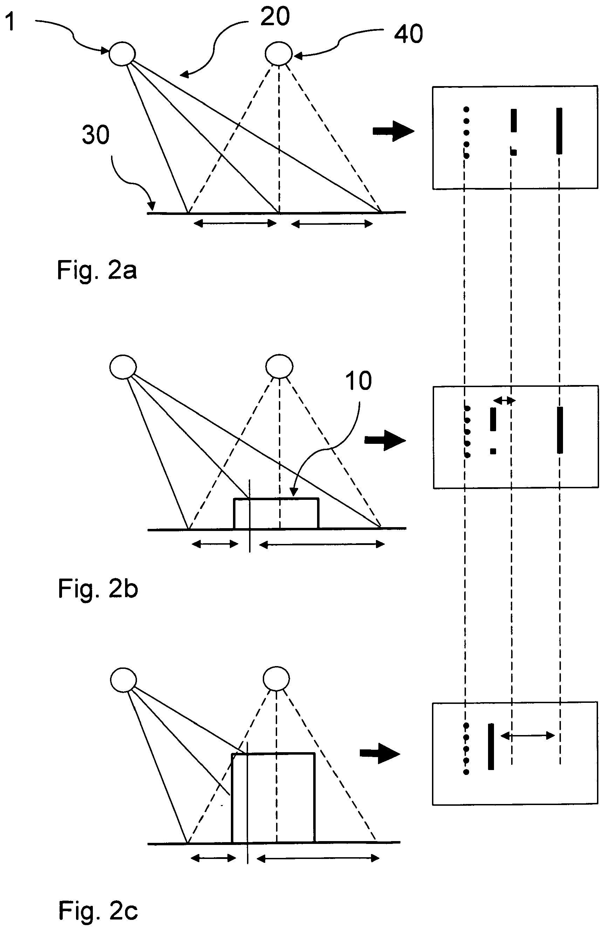

Erreicht der Körper eine bestimmte Höhe (Fig. 1c) kommt der rechte Streifen an die Stelle des ursprünglich dritten Streifens zu liegen. Da in der Kamera die Streifen nicht zu unterschieden sind, da sie alle gleich aussehen, ergibt sich bezüglich der beiden Streifen dasselbe Bild. Es ist also unsicher welche genaue Höhe das Objekt aufweist. Diese Uneindeutigkeit kann mit der erfindungsgemäßen Vorrichtung beseitigt werden. Werden die Streifen codiert können die Streifen trotz Überlagerung ihrer Position bei der Referenzmessung eindeutig zugeordnet werden (Vergleich Fig. 2a bis 2c mit derselben Messanordnung aus Fig 1a bis Fig. 1c) .

Fig. 3 zeigt eine 3D-Ansicht einer Beleuchtungseinrichtung 1 und das die Lichtquelle beleuchtende Objekt 10. Die Beleuchtungseinrichtung 1 befindet sich an einer bestimmten Position. Von der Beleuchtungseinrichtung 1 gehen Strahlen 20 aus die an sich mit dem Objekt 10 bzw. der Referenzfläche 30 an bestimmten Punkten kreuzen.

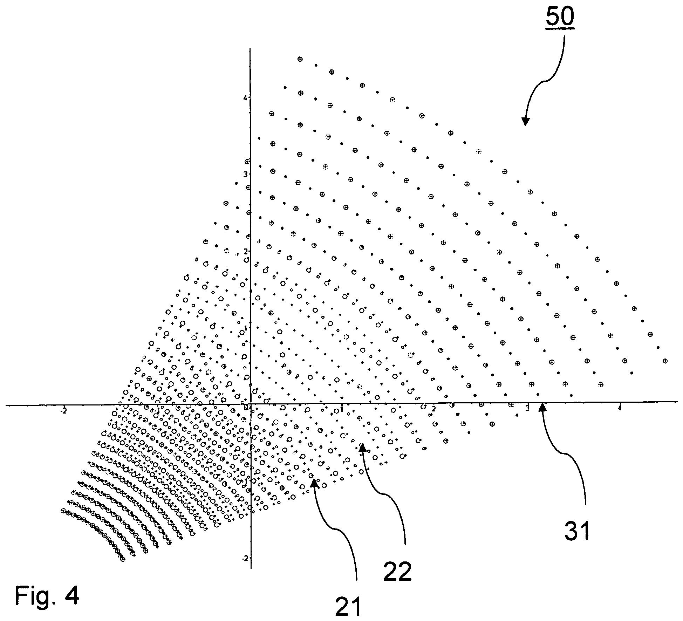

Fig. 4 zeigt diese sich aus Fig. 3 ergebende Schnittpunkte der Referenzfläche 30 und des Objektes 10 als Punktewolke in einer Draufsicht. Die Raumwinkelverteilung der Strahlen sind hierbei äquidistant gewählt. Die Kreuzungspunke der Strahlen mit der Referenzfläche sind dabei als Kreuze 31 ausgeführt, die Kreuzungspunkte mit dem Objekt als Kreise 21 bzw. 22. Die unterschiedlichen Radien symbolisieren hierbei die Codierung. Dort wo sich Objekt 10 und Referenzfläche 30 entsprechen stimmen die Positionen der Kreuzungspunkte der Referenzfläche 30 mit denen des Objektes 10 überein.

Hat das Objekt 10 eine von der Referenzfläche 30 abweichende Topographie kommt es aufgrund der unterschiedlichen Positionen von Kamera 40 (in Fig. 4 nicht eingezeichnet; hier eine Draufsicht, die Kamera 40 befindet sich also genau über dem Objekt 10 in der Koordinatenmitte) zu einer Verschiebung der Kreuzungspunkte von Referenzfläche 30 und Objekt 10.
Der Wert dieser Verschiebung steht für die lokale Erhöhung in Bezug auf die Referenzfläche 30, also die Höhe des Objektes 10 über der Referenzfläche 30.

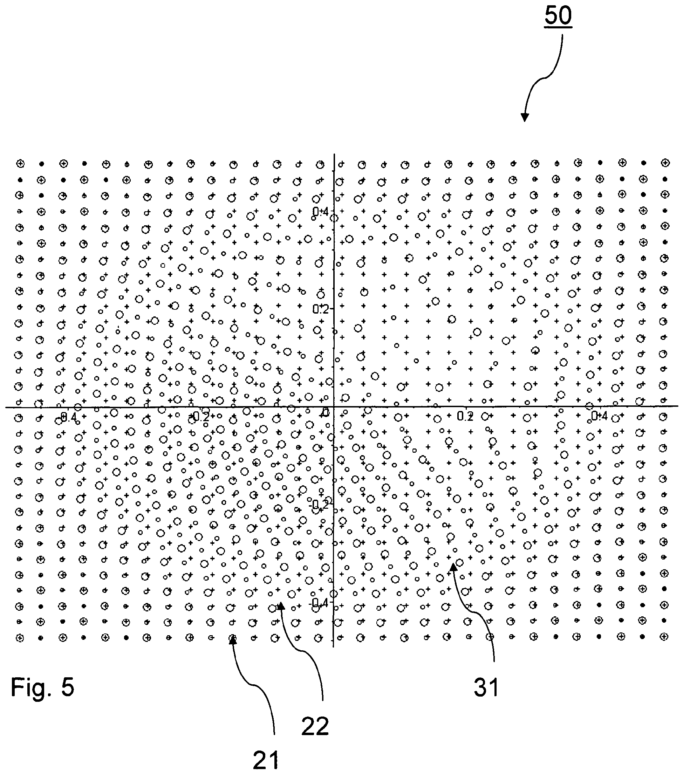

Fig. 5 zeigt die sich aus Fig. 3 ergebende Punktewolke der Schnittpunkte der Strahlen der Beleuchtungseinrichtung 1 mit dem Objekt 10 bzw. der Referenzfläche 30 in einer Draufsicht. Die Raumwinkelverteilung der Strahlen in Fig. 5 ist hierbei kartesisch gewählt. Auch hier kommt es zu einer lokalen Verschiebung der Schnittpunkte von Objekt 10 und Referenzfläche 30.

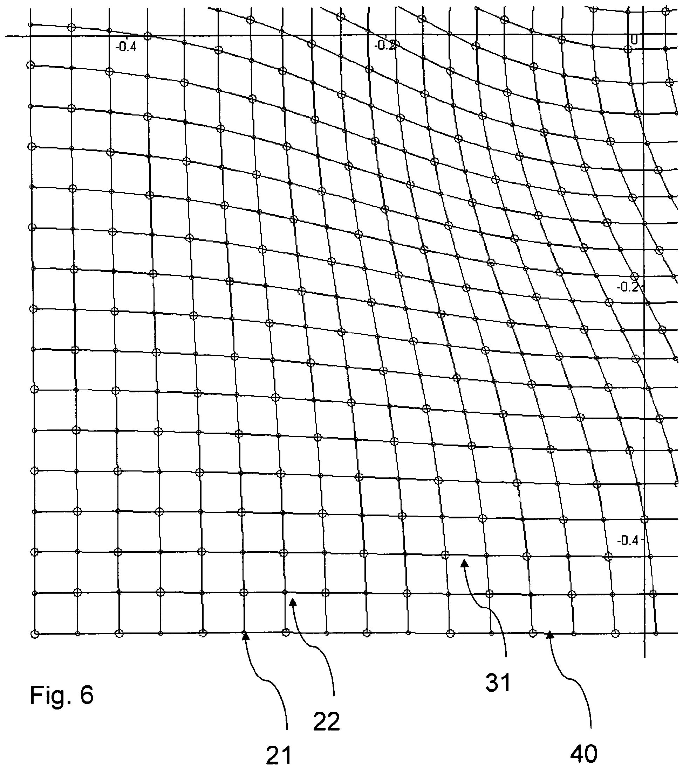

Fig. 6 zeigt einen Bildausschnitt aus Fig. 5 mit eingezeichneten Gitterlinien. Hierbei wurden die zusammengehörigen Strukturelemente 23 durch Linien verbunden. Die lokale Krümmung der Liniensegmente steht dabei für die Topographie des Objektes 10.

Mit anderen Worten kann aus der Abweichung des verzerrten Gitters 40 von dem unverzerrten Gitter der Referenzfläche die Objekttopographie rekonstruiert werden.

Nachfolgend werden die Schritte zur 3D-Positionsbestimmung nochmals genauer erläutert:
1.) Eine Referenzmessung auf einem Referenzobjekt, wie beispielsweise einer ebenen Fläche wird durchgeführt. Daraus entsteht ein
   ebenes Gitter mit äquidistant verteilten Punkten deren x,y,z-Position im Prinzip bekannt ist. Das Gitter muss dabei nicht zwangsweise eben oder äquidistant sein. Es kommt nur darauf an, dass die Position des Referenzobjektes bekannt ist.
2.) Das zu untersuchende Objekt wird eingebracht. Die projizierten Punkte (schon 2D-codiert) verschieben sich in Abhängigkeit der Objekttopographie auf dem 2D-Bildsensor der Kamera und demgemäß auch im aufgenommenen Digitalbild. Es können je nach Aufnahmegeometrie, Form und Eigenschaften des Objekt noch Uneindeutigkeiten auftreten.
3.) Es folgt die Schnittpunktsberechnung. Es werden, vorzugsweise mit einer Faltungsoperation die Schnittpunkte bzw. Schwerpunkte der projizierten Punkte mit der Referenzfläche ermittelt. Nun sind die Positionen der verschobenen Punkte x',y' sowie die Codierung aller sichtbaren Punkte bekannt. Die Informationen werden in eine Liste eingetragen.
4.) Abstandsberechnung: Von jedem der eben ermittelten Punkte wird durch eine Abstandberechnung eine Menge an N nächsten Nachbarn berechnet. Die Punkte N' mit dem kleinsten Abstand gehören zusammen. Hierbei kann es aber zu Fehlstellen beispielsweise durch Bohrungen kommen. In der Regel entstehen aber lokale Gitter in dem mehrere Punkte miteinander verbunden sind bzw. verbunden werden können (Segmentierung), sofern nicht alle "Punkte" beispielsweise in eine Bohrung fallen und damit in der Kamera nicht sichtbar sind. Dies wird je nach Größe der Nachbarschaften immer unwahrscheinlicher.
5.) Berechnung der Position: Begonnen wird vorzugsweise in der Bildmitte. Dabei werden die Eigenschaften der Punkte (große oder kleine Kreise etc.) in eine Matrix (proportional zum Bildfeld) eingetragen. Da das projizierte Bild der Lichtquelle größer als das Bildfeld der Kamera ist, erhält man aus Schritt 1.) eine Submatrix im Vergleich zur Referenzmatrix. Diese zum Teil fehlerbehaftete Codematrix wird nun decodiert. Dazu können insbesondere die einzelnen Codezustände einer Umgebung eines Codeelements mit einer Codetabelle verglichen werden. Nach der Decodierung sind die Koordinaten der auf das Objekt projizierten Punkte im Koordinatensystem der Lichtquelle bekannt. Fehlende Stellen können iterativ bearbeitet werden. Da nun die Positionen von beiden Punktwolken der von den Referenzpunkten und der der verschobenen Objektpunkte in einem Koordinatensystem bekannt ist, kann die Höhenkoordinate berechnet werden.

Allgemein, ohne Beschränkung auf die Ausführungsbeispiele eignet sich das erfindungsgemäße Verfahren insbesondere zur Aufnahme bewegter Objekte und deren dreidimensionaler Erfassung in Echtzeit, da für ein dreidimensionales Modell nur jeweils ein einzelnes Bild aufgenommen werden muss. Daher können aus einer Bildsequenz, wie insbesondere einer Videosequenz fortlaufend dreidimensionale Modelle errechnet werden, während die Bildsequenz aufgenommen wird und/oder während das Objekt bewegt wird. Demgemäß ist in Weiterbildung der Erfindung vorgesehen, dass mit der Kamera eine Bildsequenz, insbesondere eine Videosequenz aufgenommen und von der Recheneinrichtung 60 für jedes Digitalbild der Bildsequenz, oder zumindest für eine Teilmenge der Bilder der Bildsequenz jeweils ein dreidimensionales Modell ermittelt wird. Dies ist für industrielle Anwendungen besonders interessant, da sich unter anderem für automatisierte Prozesse mit Bild- oder Objekterkennung verbesserte Erfassungsmöglichkeiten ergeben. So können beispielsweise Roboter mit einer erfindungsgemäßen Vorrichtung ausgestattet werden, um Objekte zu erfassen und zu erkennen und bestimmte Aktionen durchzuführen. Als Beispiel sei ein Roboter genannt, der mit der Vorrichtung die Lage von sich bewegenden Gegenständen im Raum schnell und fortlaufend erfassen kann, um so Werkzeuge zur Bearbeitung und/oder Handhabung der Gegenstände positionieren zu können.

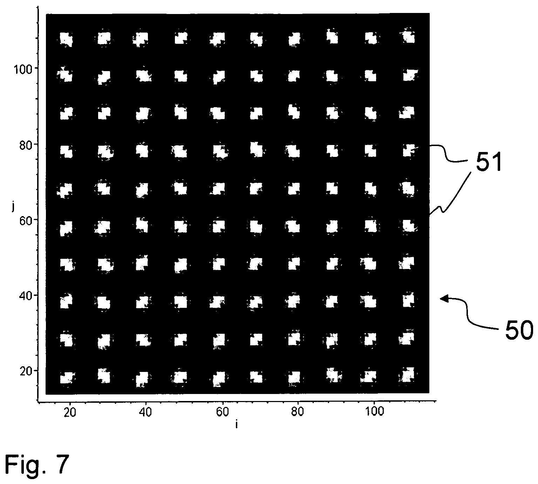

Fig. 7 zeigt ein Beispiel eines Beleuchtungsmusters 50, welches einen in zwei unterschiedlichen Raumrichtungen modulierten zweidimensionalen Code mit Codeelementen 51 enthält, beziehungsweise einen solchen Code darstellt. Die Codeelemente 51 sind allgemein langgestreckte inselförmige Strukturen. Im Speziellen sind die Codeelemente 51 als Ellipsen ausgebildet. Die Bitinformation der Codeelemente ist in der Orientierung der Längsachen der Codeelemente 51, beziehungsweise im Falle der dargestellten Ellipsen in der Orientierung der Hauptachsen codiert. Die Orientierung der Ellipsen, beziehungsweise deren Hauptachsen kann durch Convolver leicht aus dem aufgenommenen Digitalbild ermittelt werden. Derartige Convolver mit Faltungskernen können insbesondere auch in Hardware implementiert werden. Vorzugsweise werden die Convolver zur Faltung der Pixelwerte in einem FPGA oder einem anderen Mikroprozessor implementiert. Eine solche Extraktion der Bitwerte und deren zugehörige Ortsinformation durch in Hardware implementierte Convolver erlaubt eine sehr schnelle Datenverarbeitung und erleichtert damit die dreidimensionale Objekterfassung in Echtzeit und/oder während einer Videoaufnahme eines sich bewegenden Objekts.

Allgemein, ohne Beschränkung auf das spezielle in Fig. 7 gezeigte Ausführungsbeispiel ist es günstig, mit einem Codeelement jeweils ein Bit zu repräsentieren. Die codierte Ortsinformation ergibt sich dabei aus der Bitinformation einer Umgebung vorbestimmter Größe um das jeweilige Codeelement herum. Beispielsweise kann die Ortsinformation eines bestimmten Codeelements in einer n x m - Umgebung von Codeelementen codiert sein, wobei das jeweilige Codeelement Bestandteil dieser Umgebung ist. In einer solchen Umgebung können vorteilhaft ein oder mehrere Bits, beziehungsweise Codeelemente redundante Information oder ein Synchronisationsmuster enthalten.

Zwar ist es möglich, Codeelemente vorzusehen, in denen mehr als ein Bit codiert wird. Allerdings müsste dann auch die Größe der Codeelemente angepasst werden, sofern die Erkennungssicherheit der Bitinformation beibehalten werden soll. Um aber eine hohe Punktdichte auch für das 3D-Modell zu erhalten, ist daher die Codierung nur eines Bits in einem Codeelement von Vorteil, sofern das Beleuchtungsmuster hinsichtlich der Dichte der Codeelemente und deren Größe optimiert wird.

Ein Beispiel eines solchen Codes ist eine Codierung der Ortsinformation in einer 4 x 4 - Umgebung. Von der sich ergebenden 16 Bit langen Bitinformation können dann beispielsweise 9 Bit oder 10 Bit für die Ortsinformation, die verbleibenden Bits für redundante Information, etwa für eine CRC-Prüfung und/oder ein Synchronisationsmuster verwendet werden.
Fehlende Bitinformation, etwa wenn der Kontrast zu gering ist oder Codeelemente 51 im Kamerabild verdeckt werden, kann dann auch, wie bereits oben beschrieben mittels der Recheneinrichtung 60 anhand von Nachbarschaftswahrscheinlichkeiten bestimmt werden, wobei die Berechnung einer Nachbarschaftswahrscheinlichkeit für zwei Codeelemente zumindest anhand des gegenseitigen Abstands im Digitalbild erfolgt.
Gemäß noch einer weiteren Ausführungsform der Erfindung, die auch das in Fig. 7 gezeigte Beispiel umfasst, sind die Codeelemente in einem äquidistanten Raster angeordnet, besonders bevorzugt äquidistant entlang der zwei Raumrichtungen, entlang deren der Code moduliert ist. Dies ist günstig, um sowohl eine hohe Informationsdichte, als auch eine hohe Punktdichte für das dreidimensionale Modell zu erzielen.

Es ist dem Fachmann ersichtlich, dass die Erfindung nicht auf die vorstehend beschriebenen Ausführungsbeispiele beschränkt ist, sondern in vielfältiger Weise variiert werden kann. Der Gegenstand der Erfindung ist in den Ansprüchen definiert.

## Patentansprüche

1. Vorrichtung zur Erfassung von dreidimensionalen Formen eines Objektes, umfassend
- eine Kamera (40),
- wenigstens eine Beleuchtungseinrichtung (1) zur Beleuchtung des Objekts (10) mit einem Beleuchtungsmuster (50), welches einen in zwei unterschiedlichen Raumrichtungen modulierten zweidimensionalen Code mit Codeelementen (51) enthält, und
- eine Recheneinrichtung (60) zur Errechnung von dreidimensionalen Ortskoordinaten einer Oberfläche des Objekts, wobei
- die Kamera (40) und die Beleuchtungseinrichtung (1) so angeordnet sind, dass zwischen der Beleuchtungsrichtung (1) und der Betrachtungsrichtung der Kamera (40) ein Winkel eingeschlossen wird,
- und wobei die Recheneinrichtung (60) dazu eingerichtet ist, die Koordinaten der Codeelemente und die in den Codeelementen codierte Information aus dem von der Kamera (40) erhaltenen Digitalbild zu extrahieren, sowie
- anhand eines einzelnen Digitalbilds der Kamera (40) und der aufgenommenen Codeelemente (51) und deren Position im Digitalbild eine Distanzinformation der mit den Codeelementen (51) beleuchteten Orte des Objekts (10) zu errechnen und ein dreidimensionales Modell des Objekts (10) mit dreidimensionalen Ortskoordinaten zu ermitteln
- wobei die Recheneinrichtung (60) dazu eingerichtet ist, Nachbarschaften von Codeelementen (51) anhand von Nachbarschaftswahrscheinlichkeiten zu bestimmen, wobei die Berechnung einer Nachbarschaftswahrscheinlichkeit für zwei Codeelemente (51) zumindest anhand des gegenseitigen Abstands im Digitalbild erfolgt, und wobei
die Recheneinrichtung weiter dazu eingerichtet ist, Mehrdeutigkeiten in der Distanzinformation anhand der Nachbarschaftswahrscheinlichkeit zu eliminieren.

2. Vorrichtung gemäß dem vorstehenden Anspruch, **dadurch gekennzeichnet, dass** die Kamera (40) zur Aufnahme von Bildsequenzen ausgebildet ist, wobei die Recheneinrichtung (60) eingerichtet ist, für jedes Digitalbild der Bildsequenz, oder zumindest für eine Teilmenge der Bilder der Bildsequenz jeweils ein dreidimensionales Modell zu ermitteln.

3. Vorrichtung gemäß einem der vorstehenden Ansprüche, wobei die Beleuchtungseinrichtung (1) einen Laser und ein vor dem Laser angeordnetes diffraktives optisches Element umfasst, wobei das diffraktive optische Element das Beleuchtungsmuster (850) mit dem in zwei unterschiedlichen Raumrichtungen modulierten zweidimensionalen Code erzeugt und wobei das diffraktive optische Element vorzugsweise durch ein Phasenelement gebildet wird.

4. Vorrichtung gemäß einem der vorstehenden Ansprüche, **dadurch gekennzeichnet, dass** die Beleuchtungseinrichtung (1) ein Beleuchtungsmuster (50) in Form einer Anordnung isolierter, vorzugsweise äquidistanter Codeelemente (51) erzeugt.

5. Vorrichtung gemäß einem der vorstehenden Ansprüche, **dadurch gekennzeichnet, dass** das von der Beleuchtungseinrichtung (1) erzeugbare Beleuchtungsmuster (50) eine größere laterale Ausdehnung als das Bildfeld der Kamera (40) hat.

6. Vorrichtung gemäß einem der vorstehenden Ansprüche, **dadurch gekennzeichnet, dass** die Beleuchtungseinrichtung (1) einen gepulsten Laser umfasst.

7. Vorrichtung gemäß einem der vorstehenden Ansprüche, **dadurch gekennzeichnet, dass** die Recheneinrichtung (60) dazu eingerichtet ist, das aufgenommene Digitalbild mit einem Tiefpass zu filtern und anhand des gefilterten Bildes Konturen des Objekts (10) zu extrahieren.

8. Verfahren zur Erfassung von dreidimensionalen Formen von Objekten, bei welchem
- ein Objekt (10) vor einer Kamera (40) angeordnet,
- das Objekt (10) mittels einer wenigstens einer Beleuchtungseinrichtung (1) mit einem Beleuchtungsmuster (50) beleuchtet wird, welches
- einen in zwei unterschiedlichen Raumrichtungen modulierten zweidimensionalen Code mit Codeelementen (51) enthält, und
- das beleuchtete Objekt (10) mit der Kamera (40) aufgenommen wird, wobei
- zwischen der Richtung der Beleuchtungseinrichtung (1) zum Objekt (10) und der Betrachtungsrichtung der Kamera (40) ein Winkel eingeschlossen wird, und wobei
- die Recheneinrichtung (60) die Koordinaten der Codeelemente und die in den Codeelementen codierte Information aus dem von der Kamera (40) erhaltenen Digitalbild extrahiert, und
- anhand der Codeelemente und deren Position im Bild eine Distanzinformation des mit dem Codeelement (51) beleuchteten Ortes aus einem einzelnen Digitalbild errechnet wird,
- bei welchem Nachbarschaftswahrscheinlichkeiten von Codeelementen unter Berücksichtigung des gegenseitigen Abstandes der Codeelemente in dem einzelnen Digitalbild berechnet werden und Nachbarschaften von Codeelementen (51) anhand der Nachbarschaftswahrscheinlichkeiten bestimmt werden, wobei Mehrdeutigkeiten in der Distanzinformation anhand der Nachbarschaftswahrscheinlichkeit eliminiert werden.

9. Verfahren gemäß dem vorstehenden Anspruch, wobei die Recheneinrichtung (60) im Digitalbild die Koordinaten der Codeelemente des zweidimensionalen Codes detektiert,
- neben den Koordinaten zumindest ein weiteres Merkmal der Codeelemente (51) bestimmt wird und mit dem weiteren Merkmal ein Codezustand ermittelt wird, sowie
- eine Nachbarschaft der Codeelemente (51) bestimmt wird wobei
- aus der Nachbarschaften der Codeelemente eine Matrix mit zugeordneten Codezuständen erzeugt wird, wobei
- die Matrix decodiert wird, indem die einzelnen Codezustände der Matrix mit einer Codetabelle verglichen wird und jeweils ein zweidimensionaler Strahlindex der Strahlen der Beleuchtungseinrichtung (1) ermittelt wird und
- anhand des zweidimensionalen Strahlindex und anhand abgespeicherter Modelldaten der Beleuchtungseinrichtung (1) und des Bildsensors der Kamera (40) ein dreidimensionales Modell des Objekts (10) berechnet wird.

10. Verfahren gemäß einem der Ansprüche 8 oder 9, wobei von der Beleuchtungseinrichtung (60) ein Beleuchtungsmuster (50) mit isolierten Codeelementen (51) erzeugt wird, wobei die Codeelemente (51) eine Modulation bezüglich ihrer Form oder Größe aufweisen, und wobei in der Modulation Positionsinformation codiert ist.

11. Verfahren gemäß einem Ansprüche 8 bis 10, wobei die Beleuchtungseinrichtung (1) ein Beleuchtungsmuster (50) erzeugt, bei welchem die Codeelemente (51) in einem hexagonalen Raster angeordnet sind.

12. Verfahren gemäß einem der Ansprüche 8 bis 11, **dadurch gekennzeichnet, dass** mit der Kamera eine Bildsequenz, insbesondere eine Videosequenz aufgenommen und von der Recheneinrichtung (60) für jedes Digitalbild der Bildsequenz, oder zumindest für eine Teilmenge der Bilder der Bildsequenz jeweils ein dreidimensionales Modell ermittelt wird.

13. Verfahren gemäß einem der Ansprüche 8 bis 12, **dadurch gekennzeichnet, dass** die Recheneinrichtung (60) das aufgenommene Digitalbild mit einem Tiefpass filtert und anhand des gefilterten Bildes Konturen des Objekts (10) extrahiert.

## Claims

1. Apparatus for detecting three-dimensional shapes of an object, comprising
- a camera (40),
- at least one illumination device (1) for illuminating the object (10) with an illumination pattern (50) which contains a two-dimensional code - modulated in two different spatial directions - with code elements (51), and
- a computing device (60) for calculating three-dimensional location co-ordinates of a surface of the object, wherein
- the camera (40) and the illumination device (1) are arranged such that an angle is formed between the illumination direction (1) and the viewing direction of the camera (40),
- and wherein the computing device (60) is configured to extract the co-ordinates of the code elements and the information encoded in the code elements from the digital image obtained from the camera (40), and
- to calculate, using an individual digital image of the camera (40) and the recorded code elements (51) and the position thereof in the digital image, distance information of the locations of the object (10) illuminated with the code elements (51), and to determine a three-dimensional model of the object (10) with three-dimensional location co-ordinates,
- wherein the computing device (60) is configured to determine adjacencies of code elements (51) using adjacency probabilities, wherein an adjacency probability for two code elements (51) is calculated at least using the mutual spacing in the digital image, and wherein
- the computing device is further configured to eliminate ambiguities in the distance information using the adjacency probability.

2. Apparatus as claimed in the preceding claim, **characterised in that** the camera (40) is configured to record image sequences, wherein the computing device (60) is configured to determine, for each digital image of the image sequence, or at least for a subset of the images of the image sequence, a three-dimensional model in each case.

3. Apparatus as claimed in any one of the preceding claims, wherein the illumination device (1) comprises a laser and a diffractive optical element arranged in front of the laser, wherein the diffractive optical element generates the illumination pattern (850) with the two-dimensional code modulated in two different spatial directions, and wherein the diffractive optical element is preferably formed by a phase element.

4. Apparatus as claimed in any one of the preceding claims, **characterised in that** the illumination device (1) generates an illumination pattern (50) in the form of an arrangement of isolated, preferably equidistant, code elements (51).

5. Apparatus as claimed in any one of the preceding claims, **characterised in that** the illumination pattern (50) which can be generated by the illumination device (1) has a greater lateral extent than the image field of the camera (40).

6. Apparatus as claimed in any one of the preceding claims, **characterised in that** the illumination device (1) comprises a pulsed laser.

7. Apparatus as claimed in any one of the preceding claims, **characterised in that** the computing device (60) is configured to low-pass filter the recorded digital image and extract contours of the object (10) using the filtered image.

8. Method for detecting three-dimensional shapes of objects, wherein
- an object (10) is arranged in front of a camera (40),
- the object (10) is illuminated by means of at least one illumination device (1) with an illumination pattern (50) which
- contains a two-dimensional code - modulated in two different spatial directions - with code elements (51), and
- the illuminated object (10) is recoded by the camera (40), wherein
- an angle is formed between the direction of the illumination device (1) to the object (10) and the viewing direction of the camera (40), and wherein
- the computing device (60) extracts the co-ordinates of the code elements and the information encoded in the code elements from the digital image obtained from the camera (40), and
- distance information of the location illuminated with the code element (51) is calculated from a single digital image using the code elements and the position thereof in the image,
- wherein adjacency probabilities of code elements are calculated taking into consideration the mutual spacing of the code elements in the individual digital image, and adjacencies of code elements (51) are determined using the adjacency probabilities, wherein ambiguities in the distance information are eliminated using the adjacency probability.

9. Method as claimed in the preceding claim, wherein the computing device (60) detects the co-ordinates of the code elements of the two-dimensional code in the digital image,
- in addition to the co-ordinates, at least one further feature of the code elements (51) is determined and a code state is determined using the further feature, and
- an adjacency of the code elements (51) is determined, wherein
- a matrix with associated code states is generated from the adjacencies of the code elements, wherein
- the matrix is decoded in that the individual code states of the matrix are compared with a code table and in each case a two-dimensional beam index of the beams of the illumination device (1) is determined, and
- a three-dimensional model of the object (10) is calculated using the two-dimensional beam index and using stored model data of the illumination device (1) and of the image sensor of the camera (40).

10. Method as claimed in any one of claims 8 or 9, wherein an illumination pattern (50) with isolated code elements (51) is generated by the illumination device (60), wherein the code elements (51) have a modulation with respect to the shape or size thereof, and wherein position information is encoded in the modulation.

11. Method as claimed in any one of claims 8 to 10, wherein the illumination device (1) generates an illumination pattern (50), in which the code elements (51) are arranged in a hexagonal grid.

12. Method as claimed in any one of claims 8 to 11, **characterised in that** an image sequence, in particular a video sequence, is recorded by the camera and a three-dimensional model is determined in each case by the computing device (60) for each digital image of the image sequence, or at least for a subset of the images of the image sequence.

13. Method as claimed in anyone of claims 8 to 12, **characterised in that** the computing device (60) low-pass filters the recorded digital image and extracts contours of the object (10) using the filtered image.

## Revendications

1. Dispositif pour l'enregistrement de formes tridimensionnelles d'un objet, comportant :
- une caméra (40),
- au moins un système d'éclairage (1) destiné à éclairer l'objet (10) avec un motif d'éclairage (50), lequel contient un code bidimensionnel pourvu d'éléments de code (51) et modulé dans deux directions spatiales différentes, et
- un système de calcul (60) destiné à calculer les coordonnées spatiales tridimensionnelles d'une surface de l'objet,
- la caméra (40) et le système d'éclairage (1) étant agencés de telle sorte qu'un angle est formé entre le système d'éclairage (1) et la direction d'observation de la caméra (40),
- et dans lequel le système de calcul (60) est conçu pour extraire les coordonnées des éléments de code et l'information codée dans les éléments de code de l'image numérique obtenue de la caméra (40), ainsi que
- sur la base d'une image numérique individuelle de la caméra (40) et des éléments de code (51) enregistrés et de leur position dans l'image numérique, pour calculer une information de distance des emplacements de l'objet (10) éclairés par les éléments de code (51) et pour déterminer un modèle tridimensionnel de l'objet (10) au moyen des coordonnées spatiales tridimensionnelles
- dans lequel le système de calcul (60) est conçu pour définir les voisinages d'éléments de code (51) sur la base de probabilités de voisinage, dans lequel le calcul d'une probabilité de voisinage pour deux éléments de code (51) s'effectue au moins sur la base de l'écart mutuel dans l'image numérique, et
le système de calcul étant en outre conçu pour éliminer les ambiguïtés dans l'information de distance sur la base de la probabilité de voisinage.

2. Dispositif selon la revendication précédente, **caractérisé en ce que** la caméra (40) est conçue pour acquérir des séquences d'images, dans lequel le système de calcul (60) est conçu pour déterminer pour chaque image numérique de la séquence d'images, ou au moins pour une partie des images de la séquence d'images, respectivement un modèle tridimensionnel.

3. Dispositif selon l'une des revendications précédentes, dans lequel le système d'éclairage (1) comporte un laser et un élément optique diffractif agencé devant le laser, dans lequel l'élément optique diffractif génère le motif d'éclairage (850) pourvu du code bidimensionnel modulé dans deux directions spatiales différentes et dans lequel l'élément optique diffractif est formé de préférence par un élément de phase.

4. Dispositif selon l'une des revendications précédentes, **caractérisé en ce que** le système d'éclairage (1) génère un motif d'éclairage (50) prenant la forme d'un agencement d'éléments de code (51) isolés, de préférence équidistants.

5. Dispositif selon l'une des revendications précédentes, **caractérisé en ce que** le motif d'éclairage (50) pouvant être généré par le système d'éclairage (1) présente une étendue latérale supérieure à celle du champ d'image de la caméra (40).

6. Dispositif selon l'une des revendications précédentes, **caractérisé en ce que** le système d'éclairage (1) comporte un laser pulsé.

7. Dispositif selon l'une des revendications précédentes, **caractérisé en ce que** le système de calcul (60) est conçu pour filtrer l'image numérique acquise au moyen d'un filtre passe-bas et pour extraire de l'image filtrée les contours de l'objet (10).

8. Procédé d'enregistrement de formes tridimensionnelles d'objets, selon lequel :
- un objet (10) est agencé devant une caméra (40),
- l'objet (10) est éclairé au moyen d'au moins un système d'éclairage (1) pourvu d'un motif d'éclairage (50), lequel
- contient un code bidimensionnel pourvu d'éléments de code (51) et modulé dans deux directions spatiales différentes, et
- l'objet (10) éclairé est enregistré au moyen de la caméra (40),
- un angle étant formé entre la direction du système d'éclairage (1) vers l'objet (10) et la direction d'observation de la caméra (40), et
dans lequel :
- le système de calcul (60) extrait les coordonnées des éléments de code et l'information codée dans les éléments de code de l'image numérique obtenue par la caméra (40), et
sur la base des éléments de code et de leur position dans l'image, une information de distance de l'emplacement éclairé au moyen de l'élément de code (51) est calculée à partir d'une image numérique individuelle,
- selon lequel les probabilités de voisinage d'éléments de code sont calculées en prenant en compte l'écart mutuel des éléments de code dans l'image numérique individuelle et les voisinages des éléments de code (51) sont déterminés sur la base des probabilités de voisinage, des ambiguïtés dans l'information de distance étant éliminées sur la base de la probabilité de voisinage.

9. Procédé selon la revendication précédente, dans lequel le système de calcul (60) détecte dans l'image numérique les coordonnées des éléments de code du code bidimensionnel,
- en plus des coordonnées, au moins une autre caractéristique des éléments de code (51) est définie et un état de code est déterminé au moyen de l'autre caractéristique, et
- un voisinage des éléments de code (51) est défini,
- une matrice à laquelle sont associés des états de code étant générée à partir des voisinages des éléments de code,
- la matrice étant décodée, par le fait que les états de code individuels de la matrice sont comparés à un tableau de codes et respectivement un indice de faisceau bidimensionnel des faisceaux du système d'éclairage (1) est déterminé et
- un modèle tridimensionnel de l'objet (10) étant calculé sur la base de l'indice de faisceau bidimensionnel et sur la base des données de modèle mises en mémoire du système d'éclairage (1) et du capteur d'image de la caméra (40) .

10. Procédé selon l'une des revendications 8 et 9, dans lequel un motif d'éclairage (50) pourvu d'éléments de code (51) isolés est généré par le système d'éclairage (60), dans lequel les éléments de code (51) présentent une modulation en ce qui concerne leur forme ou de leur taille, et dans lequel une information de position est codée dans la modulation.

11. Procédé selon l'une des revendications 8 à 10, dans lequel le système d'éclairage (1) génère un motif d'éclairage (50) selon lequel les éléments de code (51) sont agencés dans une trame hexagonale.

12. Procédé selon l'une des revendications 8 à 11, **caractérisé en ce qu'**une séquence d'images, en particulier une séquence vidéo, est enregistrée au moyen de la caméra et respectivement un modèle tridimensionnel est déterminé par le système de calcul (60) pour chaque image numérique de la séquence d'images, ou au moins pour une partie des images de la séquence d'images.

13. Procédé selon l'une des revendications 8 à 12, **caractérisé en ce que** le système de calcul (60) filtre l'image numérique enregistrée au moyen d'un filtre passe-bas et extrait les contours de l'objet (10) sur la base de l'image filtrée.
